# EUROPÄISCHE PATENTSCHRIFT

(11) **EP 2 954 541 B1**
(45) Veröffentlichungstag und Bekanntmachung des Hinweises auf die Patenterteilung: **21.11.2018**
(21) Anmeldenummer: 14703403.7
(22) Anmeldetag: 10.02.2014
(51) Int. Cl.: H01F 7/16, H02K 33/16, H02K 1/30, F16C 32/04

(54) **LINEARAKTUATOR**
LINEAR ACTUATOR
ACTIONNEUR LINÉAIRE

(30) Priorität: 11.02.2013 DE 102013202166
(43) Veröffentlichungstag der Anmeldung: 16.12.2015
(73) Patentinhaber: Rausch & Pausch GmbH, 95100 Selb (DE)
(72) Erfinder: KEMNITZ, Rocco, 08606 Bobenneukirchen (DE); DÖHLA, Werner, 95482 Gefrees (DE); HUDEC, Julius, 35201 As (CZ); HAAS, Jakob, 36830 Auburn Alabama (US)
(74) Vertreter: Klunker IP Patentanwälte PartG mbB
(86) Internationale Anmeldenummer: PCT/EP2014/052566
(87) Internationale Veröffentlichungsnummer: WO 2014/122312

(56) Entgegenhaltungen:
- EP-A1- 0 100 436
- EP-A1- 0 181 056
- EP-A2- 0 258 569
- DE-A1-102005 011 629
- US-A1- 2011 180 980

## Beschreibung

Die vorliegende Erfindung betrifft einen Linearaktuator, insbesondere zur Verwendung in einem aktiven Motorlager eines Fahrzeugs.

In Kraftfahrzeugen können zur Verbesserung des Komforts so genannte aktive Motorlager eingesetzt werden. Mittels eines aktiven Motorlagers können unerwünschte Schwingungen und eine dadurch verursachte Geräuschübertragung in den Innenraum des Fahrzeugs unterdrückt oder zumindest verringert werden. Unerwünschte Schwingungen können beispielsweise bei einer Zylinderabschaltung des Motors auftreten, wenn einer oder mehrere der Zylinder des Motors abgeschaltet werden, wobei der Motor unrund laufen kann. Ein aktives Motorlager weist dazu eine Steuerung für einen oder mehrere Aktuatoren auf, um den Schwingungen des Motors mittels der Aktuatoren in dem Fachmann geläufiger Weise entgegenzuwirken.

Bei den Aktuatoren kann es sich insbesondere um Linearaktuatoren handeln, welche elektromagnetisch betrieben werden. Ein Linearaktuator weist üblicherweise einen Stator mit einer elektrisch bestrombaren Spule zur Erzeugung eines elektromagnetischen Feldes sowie ein bezüglich des Stators axial beweglich gelagertes Stellglied mit einem Magnetanker auf. Das Stellglied besitzt außerdem einen sich in axialer Richtung erstreckenden Stößel zur Betätigung des aktiven Motorlagers. Es ist vorteilhaft, das Stellglied beispielsweise mittels eines Federelements derart in dem Stator zu lagern, dass es reibungsfrei axial bewegbar ist.

EP 0 181 056 A zeigt eine Schaltmagnetanordnung, bei der Stellglied in einem zylinderförmigen Magentraum, der von einem Stator gebildet ist, axial beweglich gelagert ist, wobei das Stellglied ein Trägerelement aus Aluminium oder Plastik für einen Stößel aufweist und gegenüber dem Stößel axial an einen massiven den Magentraum radial ausfüllenden Magnetanker über ineinandergreifende komplementäre Kegelflächen angrenzt.

EP0258568 zeigt ein elektromagnetisches Stellelement bestehend aus einer in einem hohlzylinderförmigen Permanentmagneten koaxial angeordneten Kombination aus Spulenkörper und Spulenwicklung. Der Spulenkörper ist an beiden Enden durch scheibenförmige Federn gelagert. Bei der Ansteuerung des Linearaktuators zur Schwingungsunterdrückung des Motors können hohe Frequenzen auftreten, mit denen das Stellglied bewegt wird. Aufgabe der vorliegenden Erfindung ist es, einen Linearaktuator, insbesondere für ein aktives Motorlager, bereitzustellen, der ein gutes Verhalten auch bei Schwingungen mit hoher Frequenz aufweist.

Die Aufgabe wird durch einen Linearaktuator mit den Merkmalen des unabhängigen Anspruchs gelöst. Weiterbildungen und vorteilhafte Ausgestaltungen sind in den abhängigen Ansprüchen angegeben.

Erfindungsgemäß umfasst das Stellglied ein Trägerelement, welches sich in radialer Richtung zwischen dem Magnetanker und dem Stößel erstreckt. Das Trägerelement besteht aus einem nicht-magnetischen Material mit einer geringeren Dichte als der Magnetanker. Der Magnetanker reicht somit nicht bis an den Stößel heran, sondern wird von einem Trägerelement getragen, welches in vorteilhafter Leichtbauweise ausgebildet sein kann. Auf diese Weise kann das Gewicht des Stellglieds reduziert werden, was sich positiv auf das Verhalten des Linearaktuators auch bei Schwingungen mit hoher Frequenz auswirkt. Durch die reduzierte Massenträgheit des Stellglieds verbessert sich das Ansprechverhalten, da insbesondere bei einer Umkehrung der Bestromung der Spule die Umkehrspanne des Stellglieds verringert wird.

Der Erfindung liegt die Erkenntnis zu Grunde, dass die räumliche Ausdehnung des Magnetankers, welcher aus einem verhältnismäßig, schweren magnetischen Material besteht, reduziert werden kann, ohne dass sich dies wesentlich auf die Magnetkraft auswirkt, die auf den Magnetanker wirkt. Daher kann der radial innen liegende Teil des Stellglieds durch ein nicht magnetisches, leichteres Material ersetzt werden. Denn es hat sich unerwarteterweise herausgestellt, dass in diesem Bereich nahezu keine Feldlinien des elektromagnetischen Feldes der Spule verlaufen. Das bedeutet, dass in diesem Bereich höchstens ein ungeordneter Streufluss des Magnetfeldes auftritt, der jedoch auf die Magnetkraft keinen Einfluss hat. Die relevanten Feldlinien verlaufen in einem geschlossenen Kreis im Eisenkreis des Linearaktuators, insbesondere durch den Magnetanker.

Durch diese Aufteilung des Stellglieds in den magnetisch relevanten Magnetanker und den magnetisch nicht relevanten Träger wird somit eine Gewichtsminimierung bei gleichzeitig uneingeschränkter magnetischer Funktion erreicht. Besonders bei Aktuatoren, welche bei hohen Frequenzen betrieben oder angeregt werden, ist diese Eigenschaft sehr vorteilhaft, da dadurch die Resonanzfrequenz des Linearaktuators so hoch wie möglich liegt.

Vorzugsweise sind der Magnetanker und das Trägerelement daher derart dimensioniert, dass eine Vergrößerung des Magnetankers in Radialrichtung nach innen keine Vergrößerung oder zumindest im Wesentlichen keine Vergrößerung, beispielsweise eine Vergrößerung um maximal 5%, der im Betrieb durch das elektromagnetische Feld erzeugten und auf das Stellglied wirkenden Magnetkraft bewirken würde. Mit anderen Worten, die räumliche Ausdehnung und die Masse des Magnetankers sind bei einem vorgegeben Aufbau des Stators und einer vorgegebenen Stromstärke, mit der die Spule bestromt wird, auf ein Minimum reduziert. Es ist nicht notwendig, den Magnetanker radial nach innen in Richtung des Stößels zu vergrößern und das Trägerelement dementsprechend zu verkleinern, da wie erläutert in diesem Bereich keine relevanten Feldlinien des elektromagnetischen Feldes verlaufen. Die relevanten Feldlinien verlaufen durch dem Magnetanker hindurch. Der Magnetanker ist somit auf sein magnetisch relevantes Volumen reduziert. Eine weitere Verkleinerung des Magnetankers würde jedoch zu einer Drosselung des Magnetfeldes und zu einer negativen Beeinflussung der Feldlinien führen, was eine Verkleinerung der Magnetkraft zur Folge hätte.

In einer bevorzugten Ausgestaltung der Erfindung ist der Magnetanker ringförmig ausgebildet und umgibt das Trägerelement. Der Magnetanker nimmt somit denjenigen Teil des Stellglieds ein, welcher zu der Spule benachbart und daher für die Wirkung des Magnetfelds besonders relevant ist. Vorteilhafterweise ist der ringförmige Magnetanker dabei so schmal wie möglich ausgebildet, wobei das Verhältnis des Außendurchmessers des Magnetankers zum Innendurchmesser des Magnetankers höchstens 2:1, vorzugsweise höchstens 1,5:1 und weiter vorzugsweise höchstens 1,25:1 beträgt. Bezogen auf den Gesamtdurchmesser des Stellglieds nimmt der Magnetanker somit vorzugsweise höchstens die Hälfte, weiter vorzugsweise höchstens ein Drittel und noch weiter bevorzugt höchstens ein Fünftel ein.
Vorzugsweise verjüngt sich der Querschnitt des Magnetankers in axialer Richtung nach innen. Es hat sich nämlich gezeigt, dass auch die Form des Querschnitts des Magnetankers dazu genutzt werden kann, das Volumen des Magnetankers zu reduzieren, ohne dabei die Kraftbilanz der Magnetkraft negativ zu beeinflussen. Insbesondere kann der Querschnitt des Magnetankers von radial innen reduziert werden, wobei die Feldlinien des elektromagnetischen Feldes nicht gestört werden. Beispielsweise können im Vergleich zu einem rechteckigen Querschnitt eine Ecke oder zwei Ecken von radial innen weggenommen werden, so dass beispielsweise ein etwa trapezförmiger Querschnitt entsteht. Andere sich radial nach innen verjüngende Querschnittsformen sind ebenso möglich, wie beispielsweise eine Trapezform mit abgerundeten Ecken, eine runde Form oder auch eine konkave Form, solange der Verlauf der Feldlinien durch den Magnetanker dadurch nicht behindert wird.

Zur Reduzierung des Gewichts des Stellglieds ist es vorteilhaft, wenn das Trägerelement ein Leichtbaumaterial umfasst oder im Wesentlichen vollständig daraus besteht, wie beispielsweise Aluminium, Magnesium, Kunststoff und/oder einen Faserverbundwerkstoff.

Das Stellglied umfasst zumindest einen Dauermagneten, der an den Magnetanker angrenzt und vorzugsweise am Außenumfang des Magnetankers angeordnet ist. In einer bevorzugten Ausgestaltung können zwei in axialer Richtung beabstandete und vorzugsweise in radialer Richtung magnetisierte Dauermagneten vorgesehen sein. Die Dauermagneten, welche auch als Permanentmagneten bezeichnet werden können, sind insbesondere dann von Bedeutung, wenn der Eisenkreis des Linearaktuators kein feststehendes Polteil umfasst oder eine von der Polarität des Erregerstroms abhängige Bewegungsrichtung des Stellglieds gewünscht ist. Die axiale Verlagerung des Stellglieds wird dann durch die auf den Magnetanker wirkende Magnetkraft des Magnetfelds hervorgerufen, welches sich aus dem elektromagnetischen Feld der bestromten Spule und dem Magnetfeld der Dauermagneten zusammensetzt.

Vorteilhaft weist das Trägerelement Durchbrechungen auf und kann vorzugsweise in axialer Richtung zumindest bereichsweise eine geringere

Abmessung aufweisen als der Magnetanker. Das Trägerelement kann auch Ausnehmungen aufweisen, um Gewicht zu sparen. Diese Maßnahmen dienen dazu, das Volumen und damit die Masse des Trägerelements weiter zu reduzieren. Das Ausmaß, die Anordnung, die Ausgestaltung und die Form der Durchbrechungen und/oder Ausnehmungen in dem Trägerelement sind insbesondere von dem verwendeten Material des Trägerelements und auch den von der Anwendung abhängenden Magnetkräften abhängig, und zwar derart, dass die mechanische Stabilität des Trägerelements nicht beeinträchtigt ist. Die Durchbrechungen können jegliche Form aufweisen und sich in axialer Richtung erstrecken. Es ist auch möglich, keine vollständig durch das Trägerelement hindurchtretenden Durchbrechungen vorzusehen, sondern lediglich Ausnehmungen auf einer oder beiden axialen Seiten des Trägerelements auszubilden. Das Trägerelement weist einen den Magnetanker tragenden radial außen liegenden Teil und einen den Stößel tragenden radial innen liegenden Teil auf, welche über speichenartige Stege miteinander verbunden sind. Beispielsweise kann das Trägerelement wie eine Felge ausgebildet sein und der Magnetanker auf dem Außenumfang des Trägerelements sitzen. Das Trägerelement kann zumindest ein tiefgezogenes Teil umfassen, was eine besonders einfache und kostengünstige Herstellung erlaubt.
Wie bereits eingangs erläutert, ist das Stellglied mittels zumindest eines Federelements in dem Stator derart gelagert, dass es bei Bestromung der Spule reibungsfrei axial bewegbar ist. Vorzugsweise ist das Stellglied an gegenüberliegenden axialen Seiten des Magnetankers jeweils über mindestens ein Federelement mit dem Stator derart gekoppelt, dass das Stellglied mittels der Federelemente bezüglich des Stators radial ausgerichtet ist. Bei dem mindestens einen Federelement zur radialen Ausrichtung handelt es sich vorteilhaft um dasselbe Federelement wie zur reibungsfreien Lagerung. Zusätzlich zur Lagerfunktion können die Federelemente definierte Rückstellkräfte auf das Stellglied ausüben, so dass durch geeignete Wahl der Federgeometrie und der Federdicke die Steifigkeit des Linearaktuators eingestellt werden kann, ohne dass beispielsweise zusätzliche Druckfedern notwendig sind. Vorzugsweise werden Federelemente verwendet, die im entspannten Zustand eben sind und sich in einer Ebene senkrecht zur Bewegungsrichtung des Magnetankers erstrecken. Die Federelemente können aus einem blechförmigen Material herausgetrennt, vorzugsweise ausgestanzt, sein und somit als werkzeugfallendes Teil, beispielsweise als Schnittteil, einfach und kostengünstig hergestellt werden. Die Herstellung durch Laserschnitt oder durch Ätzen ist ebenfalls möglich.

Die reibungsfreie Lagerung des Stellglieds hat den Vorteil, dass keine Reibungskräfte auftreten und dadurch eine mechanische Belastung des Stellglieds vermieden wird. Ferner wird keine Hysterese durch Reibung erzeugt, so dass lediglich eine magnetische Hysterese verbleibt. Durch die fehlende Reibung wird das Ansprechverhalten des Linearaktuators verbessert, d.h. bei einer Änderung des Führungssignals, insbesondere einer Umkehr des elektrischen Stroms, erfolgt unverzögert eine Änderung des Stellsignals, d.h. der erzeugten Kraft bzw. des von dem Stellglied zurückgelegten Wegs. In Kennlinien ist dieses Verhalten durch eine spitze Umkehr des Ausgangssignals bei Umkehr des Führungssignals zu erkennen. Totzeiten an den Umkehrpunkten werden so vermieden.

Der Linearaktuator wird vorzugsweise in einem Motorlager für einen Motor eines Fahrzeugs verwendet, um Schwingungen des Motorlagers entgegenzuwirken. Dazu ist eine Steuerung für den Linearaktuator vorgesehen, die den Linearaktuator auf geeignete Weise steuert. Insbesondere lässt sich damit die Schwingungsübertragung von dem Motor auf die Karosserie des Fahrzeugs, welche beispielsweise bei einer Zylinderabschaltung des Motors auftreten kann, reduzieren. Das Motorlager kann ein mit Öl gefülltes Volumen umfassen, auf dem der Motor gelagert ist. Der Stößel des Linearaktuators ist an eine an das Ölvolumen angrenzende Membran gekoppelt, so dass das Ölvolumen mit einer von einem Sensor aufgenommenen Frequenz angeregt werden kann, um die Schwingungen des Motors durch die entsprechenden Schwingungen des Ölvolumens zu dämpfen.

Im Folgenden wird die Erfindung anhand der begleitenden schematischen Zeichnungen beispielhaft beschrieben. Darin zeigen:
Fig. 1 einen Linearaktuator in einer Schnittdarstellung,
Fig. 2a das Stellglied des Linearaktuators aus Fig. 1 ohne den Stößel in einer Schnittdarstellung,
Fig. 2b ein anderes Ausführungsbeispiel eines Stellglieds (ohne Stößel),
Fig. 3 das Stellglied des Linearaktuators aus Fig. 1 ohne den Stößel in Draufsicht,
Fig. 4 das Stellglied des Linearaktuators aus Fig. 1 zusammen mit den Federelementen in perspektivischer Darstellung,
Fig. 5 ein Federelement in Draufsicht und
Fig. 6 schematisch den Verlauf der Feldlinien des elektromagnetischen Felds.

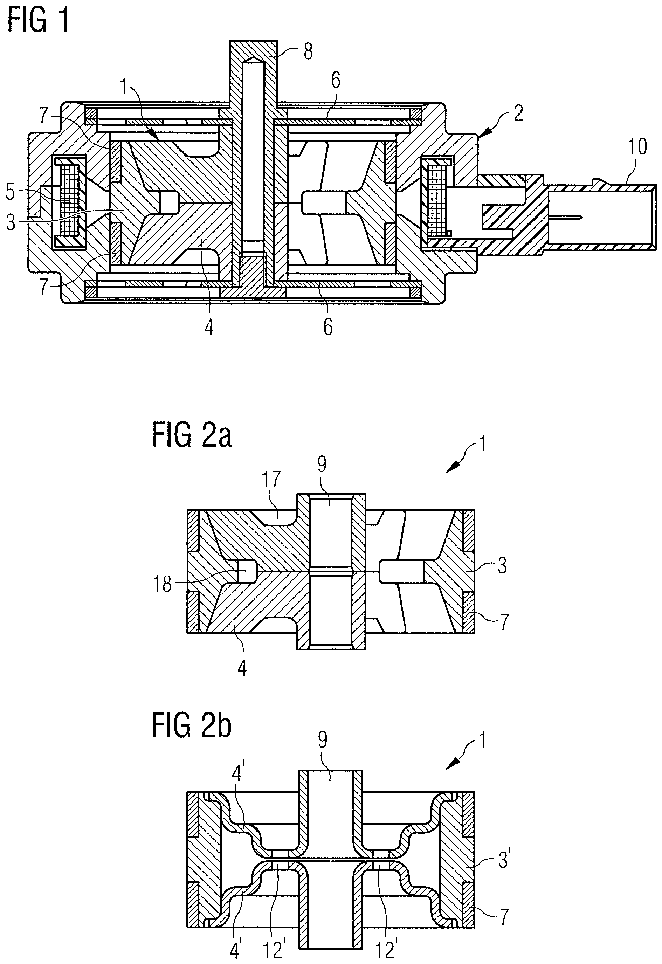

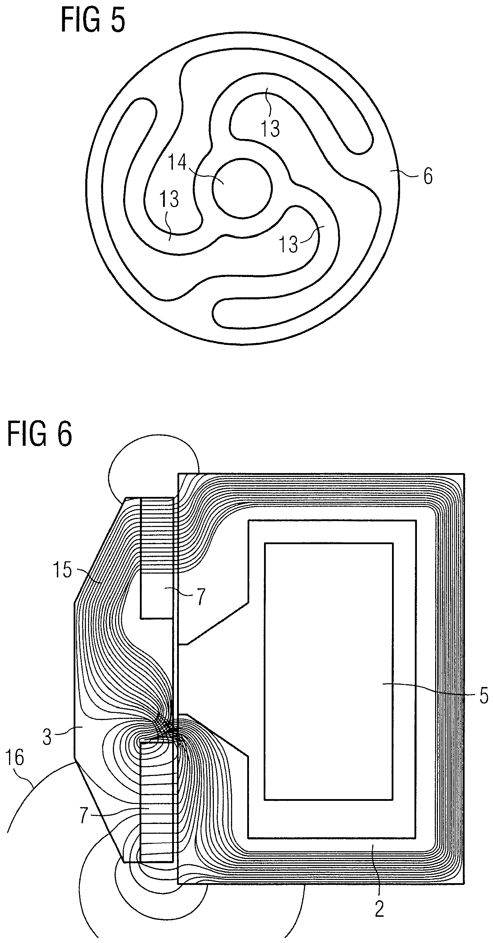

In Fig. 1 ist ein Linearaktuator für ein aktives Motorlager eines Kraftfahrzeugs dargestellt. Der Linearaktuator weist einen ortsfesten Stator 2 auf, der eine elektrisch bestrombare Spule 5 umfasst. Des Weiteren ist ein elektrischer Anschluss 10 vorgesehen, über den der Linearaktuator mit Strom versorgt wird. In dem Stator 2 ist ein Stellglied 1 mit einem Stößel 8 über zwei Federelemente 6 axial beweglich und radial ausgerichtet gelagert. Die Federelemente 6 sind derart ausgebildet, dass das Stellglied 1 reibungsfrei gelagert ist. D.h. zwischen dem Stator 2 und dem Stellglied 1 besteht vorzugsweise ein Luftspalt, der durch die Lagerung des Stellglieds 1 mittels der Federelemente 6 auch während der axialen Bewegung des Stellglieds 1 aufrecht erhalten wird. Eines der Federelemente 6 ist in Fig. 5 in Draufsicht dargestellt. Das Federelement 6 ist im Wesentlichen eben ausgebildet und weist geschwungene, hier im Wesentlichen S-förmige, Federbeine 13 auf, die für die radiale Ausrichtung des Stellglieds 1 sorgen. Die radiale Steifigkeit des Federelements 6 ist im Vergleich zu seiner axialen Steifigkeit hoch, so dass die radiale Ausrichtung auch bei einer axialen Bewegung gewährleistet ist. Durch die Verwendung solcher Federelemente 6 kann auf zusätzliche Druckfedern zur Rückstellung des Stellglieds 1 verzichtet werden, da die Federelemente 6 nicht nur zur Lagerung sondern auch zur Rückstellung des Stellglieds 1 in seine Ausgangsposition dienen.

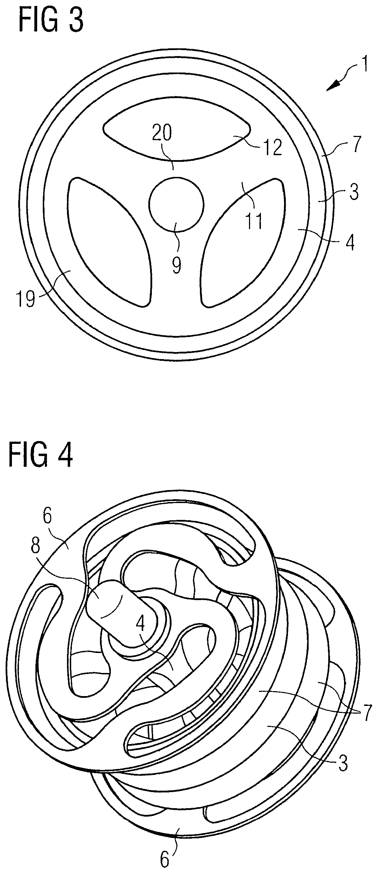

Das Stellglied 1 umfasst einen Magnetanker 3 sowie ein Trägerelement 4, welches zwischen dem Magnetanker 3 und dem Stößel 8 angeordnet ist. Der Stößel 8 ist in eine Bohrung 9 (siehe Fig. 2a, 3) des Trägerelements 4 eingesetzt, kann aber auch mit dem Trägerelement 4 als integrales Bauteil ausgebildet sein. Durch Bestromung der Spule 5 wird das Stellglied 1 entgegen der axial wirkenden Kräfte der Federelemente 6 in axialer Richtung verlagert. Der Stößel 8 dient dabei zur Anbindung des Linearaktuators an umliegende Bauteile des Motorlagers. Da der Linearaktuator kein festes Polteil aufweist, sind radial außen liegend zwei Dauermagnete 7 vorgesehen, so dass durch Erzeugung eines elektromagnetischen Feldes durch die Spule 5 und die daraus resultierende Magnetisierung des Magnetankers 3 eine Magnetkraft in axialer Richtung erzeugt wird. Die notwendige Magnetkraft zur Verlagerung des Stellglieds 1 wird durch ein Zusammenspiel der elektromagnetisch erzeugten Magnetkraft und der Magnetkraft der Dauermagneten 7 bewirkt. Die Anordnung der Dauermagneten 7 in Ausnehmungen des Magnetankers 3 erlaubt zudem eine kompakte Bauweise.

Der Linearaktuator ist dazu vorgesehen, durch Verlagerung des Stößels 8 andere Bauteile des Motorlagers so zu beeinflussen, um mittelbar Schwingungen des Motors des Kraftfahrzeugs entgegenzuwirken, damit diese nicht auf andere Karosserieteile und in den Innenraum des Fahrzeugs übertragen werden. Dazu wird der Linearaktuator mit einer durch eine Steuerung ermittelten Frequenz dynamisch angeregt. Beispielsweise ist der Stößel an eine Membran gekoppelt, welche ein Ölvolumen begrenzt, auf dem der Motor gelagert ist und das zur Schwingungsdämpfung entsprechend mittels des Linearaktuators angeregt wird. Durch Umpolung der Spule 5 erfolgt eine Umkehrung der Magnetkraft und damit eine Umkehrung der Bewegungsrichtung des Stellglieds 1. Zusätzlich wird eine Bewegungsumkehrung durch die Rückstellkraft der Federelemente 6 unterstützt. In Fig. 4 ist die Anordnung des Stellglieds 1 mit den Federelementen 6 dargestellt. Es können auch mehr als zwei oder nur ein derartiges Federelement vorgesehen sein. Der Stößel 8 ist in die Bohrung 9 des Trägerelements 4 eingesetzt und ragt durch eine zentrale Öffnung 14 der Federelemente 6.
Bei der Anwendung des Linearaktuators in einem aktiven Motorlager treten hohe Frequenzen auf, mit denen der Linearaktuator schwingt. Durch die erfindungsgemäße Lösung wird die Masse des Stellglieds 1 gering gehalten, so dass die Resonanzfrequenz des Stellglieds 1 erhöht wird und Massenträgheitseffekte reduziert werden. Dementsprechend sind die Masse des Magnetankers 3 auf ein Minimum reduziert und das Trägerelement 4 aus einem Leichtbaumaterial, wie Aluminium, Magnesium, Kunststoff oder einem Faserverbundwerkstoff, nämlich einem Material mit einer geringeren Dichte als das Material des Magnetankers 3 gefertigt.
Wie in Fig. 6 dargestellt, treten im radial innen liegenden Bereich nahezu keine relevanten Feldlinien des elektromagnetischen Feldes auf, so dass dieser Bereich für die Kraftbilanz nicht relevant ist. Lediglich ein für die Kraftbilanz nicht relevanter, ungeordneter Streufluss 16 tritt aus dem Eisenkreis aus. Es ist ausreichend, den Magnetanker 3 nur in dem für die Kraftbilanz relevanten Bereich, d.h. in demjenigen Bereich des Stellglieds 1 vorzusehen, welcher von den relevanten Feldlinien 15 durchdrungen wird. Eine Vergrößerung des Magnetankers 3 nach radial innen liefert keinen oder im Wesentlichen keinen, beispielsweise maximal 5%, Kraftzuwachs bei vorgegebenen Aufbau des Stators 2 und bei vorgegebener Stromstärke. Daher kann hier das schwere magnetische Material des Magnetankers 3 durch ein nicht-magnetisches Leichtbaumaterial des Trägerelements 4 ersetzt werden. Der Magnetanker 3 kann eine sich nach radial innen verjüngende Querschnittsform aufweisen, solange, wie in Fig. 6 zu sehen ist, die relevanten Feldlinien 15 im Wesentlichen innerhalb des Magnetankers 3 verlaufen. Andere Querschnittsformen, die diese Bedingung erfüllen, sind ebenfalls möglich, beispielsweise abgerundete Formen.

In Fig. 2a ist der Aufbau des Stellglieds 1 (ohne den Stößel 8) im Schnitt dargestellt. Fig. 3 zeigt eine Draufsicht. Es ist zu erkennen, dass der Magnetanker 3 als ringförmiger Teil des Stellglieds 1 ausgebildet ist. Das Trägerelement 4 ist bezüglich des Magnetankers 3 radial innen liegend angeordnet. Aus Konstruktionsgründen ist das Trägerelement 4 hier zweiteilig ausgebildet. Insbesondere kann durch die abgeschrägte radial außen liegende Seite des Trägerelements 4 und die entsprechend abgeschrägte Form des Magnetankers 3 der Magnetanker 3 einfach ohne zusätzliche Befestigungsmittel gehalten werden.

Wie in Fig. 2a und 3 dargestellt, ist das Gewicht des Trägerelements 4 weiter reduziert, indem Durchbrechungen 12, sowie radiale Ausnehmungen 18 und axiale Ausnehmungen 17 vorgesehen sind. In der Draufsicht ist das felgenartige Design des Trägerelements 4 mit seinen speichenartigen Stegen 11 zu erkennen, welche einen radial außen liegenden Teil 19 mit einem radial innen liegenden Teil 20 verbinden. Der radial außen liegende Teil 19 trägt den Magnetanker 3, während der radial innen liegende Teil 20 den Stößel 8 trägt. Andere Formen des Trägerelements 4, insbesondere der Durchbrechungen und Ausnehmungen, sind möglich und können abhängig von der zu tragenden Belastung und dem verwendeten Material gewählt werden. Es ist auch möglich, keine Durchbrechungen und/oder Ausnehmungen vorzusehen. Der Magnetanker 3 nimmt nur einen kleinen Teil des Stellglieds 1 ein. Beispielsweise kann der Magnetanker 3 weniger als 20%, vorzugsweise weniger als 10%, des Gesamtdurchmessers des Stellglieds 1 einnehmen. Beispielsweise kann der Magnetanker 3 einen Außendurchmesser von 47,4 mm und einen Innendurchmesser von 39,0 mm aufweisen, so dass der Magnetanker 3 eine Wandstärke von lediglich 4,2 mm aufweist.

In einem alternativen Ausführungsbeispiel, das in Fig. 2b dargestellt ist und für das ansonsten das zuvor Gesagte ebenso gilt, ist das Trägerelement 4' durch zwei tiefgezogene Teile gebildet. Es sind zwei identische tiefgezogene Teile 4' vorgesehen, die einander zugewandt sind. Zwischen den beiden Teilen ist der Magnetanker 3' angeordnet, analog der zweiteiligen Konstruktion des in Fig. 2a dargestellten Trägerelements 4. Um einen Austausch von Fluid in axialer Richtung zu ermöglichen und auch um weiter an Gewicht zu sparen, sind axiale Durchbrechungen 12' vorgesehen. Diese sind in beiden Teilen des Trägerelements 4' vorgesehen, wobei die Teile des Trägerelements 4' derart zueinander ausgerichtet sind, dass sich die Durchbrechungen 12' der beiden Teile decken. Ferner ist auch die zentrale Bohrung 9 in dem Trägerelement 4', in welcher der Stößel 8 getragen wird, durch Tiefziehen gebildet. Die Herstellung des Trägerelements 4' im Tiefziehverfahren ist besonders einfach und kostengünstig.

## Patentansprüche

1. Linearaktuator, umfassend einen Stator (2) mit einer elektrisch bestrombaren Spule (5) zur Erzeugung eines elektromagnetischen Feldes (15) sowie ein bezüglich des Stators (2) axial beweglich gelagertes Stellglied (1) mit einem magnetischen Magnetanker (3) und zumindest einem an dem Magnetanker (3) angrenzenden Dauermagneten (7), und einem sich in axialer Richtung erstreckenden Stößel (8), wobei das Stellglied (1) mittels zumindest eines Federelements (6) in dem Stator (2) derart gelagert ist, dass es bei Bestromung der Spule (5) reibungsfrei axial bewegbar ist,
**dadurch gekennzeichnet, dass** das Stellglied (1) ein Trägerelement (4) umfasst, welches sich in radialer Richtung zwischen dem Magnetanker (3) und dem Stößel (8) erstreckt, wobei das Trägerelement (4) aus einem nicht-magnetischen Material mit einer geringeren Dichte als der Magnetanker (3) besteht, wobei das Trägerelement (4) einen den Magnetanker (3) tragenden, radial außen liegenden Teil (19) und einen den Stößel (8) tragenden, radial innen liegenden Teil (20) aufweist, welche über speichenartige Stege (11) miteinander verbunden sind.

2. Linearaktuator nach Anspruch 1, wobei der Magnetanker (3) und das Trägerelement (4) derart dimensioniert und eingerichtet sind, dass eine Vergrößerung des Magnetankers (3) in radialer Richtung nach innen im Wesentlichen keine Vergrößerung der im Betrieb durch das elektromagnetische Feld (15) erzeugten und auf das Stellglied (1) wirkenden Magnetkraft bewirken würde.

3. Linearaktuator nach Anspruch 1 oder 2, wobei der Magnetanker (3) ringförmig ausgebildet ist und das Trägerelement (4) umgibt.

4. Linearaktuator nach Anspruch 3, wobei das Verhältnis des Außendurchmessers des Magnetankers (3) zum Innendurchmesser des Magnetankers (3) höchstens 2:1, vorzugsweise höchstens 1,5:1, weiter vorzugsweise höchstens 1,25:1, beträgt.

5. Linearaktuator nach einem der Ansprüche 1 bis 4, wobei sich der Querschnitt des Magnetankers (3) in radialer Richtung nach innen verjüngt.

6. Linearaktuator nach einem der Ansprüche 1 bis 5, wobei das Trägerelement (4) Aluminium, Magnesium, Kunststoff und/oder einen Faserverbundwerkstoff umfasst oder im Wesentlichen vollständig daraus besteht.

7. Linearaktuator nach einem der Ansprüche 1 bis 6, wobei der zumindest eine Dauermagnet (7) am Außenumfang des Magnetankers angeordnet ist, wobei vorzugsweise zwei in axialer Richtung beabstandete Dauermagneten (7) vorgesehen sind.

8. Linearaktuator nach einem der Ansprüche 1 bis 7, wobei das Trägerelement (4) Durchbrechungen (12) aufweist und vorzugsweise in axialer Richtung zumindest bereichsweise (17) eine geringere Abmessung aufweist als der Magnetanker (3).

9. Linearaktuator nach einem der Ansprüche 1 bis 8, wobei das Trägerelement (4) zumindest ein tiefgezogenes Teil umfasst.

10. Linearaktuator nach einem der Ansprüche 1 bis 9, wobei das Stellglied (1) an gegenüberliegenden axialen Seiten des Magnetankers jeweils über mindestens ein Federelement (6) mit dem Stator (2) derart gekoppelt ist, dass das Stellglied (1) mittels der Federelemente (6) bezüglich des Stators (2) radial ausgerichtet ist.

11. Linearaktuator nach Anspruch 10, wobei die Federelemente (6) im entspannten Zustand eben sind und sich in einer Ebene senkrecht zur Bewegungsrichtung des Stellglieds (4) erstrecken.

12. Linearaktuator nach Anspruch 10 oder 11, wobei die Federelemente (6) aus einem blechförmigen Material herausgetrennt, vorzugsweise ausgestanzt, sind.

13. Motorlager für einen Motor eines Fahrzeugs, umfassend zumindest einen Linearaktuator nach einem der Ansprüche 1 bis 12 und eine Steuerung für den Linearaktuator, wobei die Steuerung eingerichtet ist, Schwingungen des Motorlagers durch geeignete Steuerung des Linearaktuators entgegenzuwirken.

14. Verwendung des Linearaktuators nach einem der Ansprüche 1 bis 12 in einem Motorlager für einen Motor eines Fahrzeugs.

## Claims

1. A linear actuator, comprising a stator (2) with a coil (5) that can be fed with electric current for generating an electromagnetic field (15), and an actuating element (1) that is borne in axially movable fashion with reference to the stator (2) and that has a magnetic magnetic armature (3) and at least one permanent magnet (7) adjoining the magnetic armature (3) and a ram (8) extending in the axial direction, wherein the actuating element (1) in the stator (2) is so borne by means of at least one spring element (6) that said actuating element can be moved axially in frictionless fashion when the coil (5) is fed with current,
**characterized in that** the actuating element (1) has a support element (4) extending in the radial direction between the magnetic armature (3) and the ram (8), wherein the support element (4) is composed of a non-magnetic material of a lower density than the magnetic armature (3), wherein the support element (4) has a radially outwardly disposed part (19) that supports the magnetic armature (3) and a radially inwardly disposed part (20) that supports the ram (8), said parts being interconnected via spoke-like bars (11).

2. The linear actuator according to claim 1, wherein the magnetic armature (3) and the support element (4) are so dimensioned and adapted that an enlargement of the magnetic armature (3) in the radial direction towards the inside would substantially effect no increase of the magnetic force that is generated by the electromagnetic field (15) during operation and that acts on the actuating element (1).

3. The linear actuator according to claim 1 or 2, wherein the magnetic armature (3) is of annular configuration and surrounds the support element (4).

4. The linear actuator according to claim 3, wherein the ratio of the outside diameter of the magnetic armature (3) to the inside diameter of the magnetic armature (3) amounts to 2:1 at most, preferably 1.5:1 at most, further preferably 1.25:1 at most.

5. The linear actuator according to any of claims 1 to 4, wherein the cross section of the magnetic armature (3) is tapered towards the inside in the radial direction.

6. The linear actuator according to any of claims 1 to 5, wherein the support element (4) comprises aluminum, magnesium, plastic and/or a fiber composite material or is composed thereof substantially completely.

7. The linear actuator according to any of claims 1 to 6, wherein the at least one permanent magnet (7) is arranged on the outer circumference of the magnetic armature, wherein preferably two permanent magnets (7) are provided which are spaced apart in the axial direction.

8. The linear actuator according to any of claims 1 to 7, wherein the support element (4) has through holes (12) and preferably has a smaller dimension than the magnetic armature (3) at least regionally (17) in the axial direction.

9. The linear actuator according to any of claims 1 to 8, wherein the support element (4) comprises at least one deep-drawn part.

10. The linear actuator according to any of claims 1 to 9, wherein the actuating element (1) is so coupled to the stator (2) on opposing axial sides of the magnetic armature respectively via at least one spring element (6) that the actuating element (1) is oriented radially with reference to the stator (2) by means of the spring elements (6).

11. The linear actuator according to claim 10, wherein the spring elements (6) are flat in the stress-free state and extend in a plane perpendicular to the movement direction of the actuating element (4).

12. The linear actuator according to claim 10 or 11, wherein the spring elements (6) are separated from a sheet-shaped material, preferably punched out.

13. An engine bearing for a vehicle engine, comprising at least one linear actuator according to any of claims 1 to 12 and a control for the linear actuator, wherein the control is adapted to counteract vibrations of the engine bearing by suitably controlling the linear actuator.

14. Utilization of the linear actuator (1) according to any of claims 1 to 12 in an engine bearing for a vehicle engine.

## Revendications

1. Actionneur linéaire comprenant un stator (2) ayant une bobine (5) apte à être alimentée en courant pour la génération d'un champ électromagnétique (15) ainsi qu'un organe d'actionnement (1) logé en mobilité axiale par rapport au stator (2) et doté d'un armature d'aimant magnétique (3) et d'au moins un aimant permanent (7) adjacent à l'armature d'aimant (3), et un poussoir (8) s'étendant en direction axiale, cependant que l'organe d'actionnement (1) est, au moyen d'au moins un élément ressort (6), logé de telle manière dans le stator (2) qu'il est axialement déplaçable sans frottement quand la bobine (5) est alimentée en courant,
**caractérisé en ce que** l'organe d'actionnement (1) comprend un élément support (4) qui s'étend en direction radiale entre l'armature d'aimant (3) et le poussoir (8), cependant que l'élément support (4) consiste en un matériau amagnétique présentant une densité inférieure à celle de l'armature d'aimant (3), cependant que l'élément support (4) comporte une partie (19) radialement extérieure supportant l'armature d'aimant (3) et une partie (20) radialement intérieure supportant le poussoir (8), lesquelles sont reliées entre elles par l'intermédiaire de traverses (11) en forme de rayons.

2. Actionneur linéaire selon la revendication 1, cependant que l'armature d'aimant (3) et l'élément support (4) sont dimensionnés et conçus de telle façon qu'un agrandissement de l'armature d'aimant (3) en direction radiale vers l'intérieur n'engendrerait sensiblement pas d'augmentation de la force magnétique générée lors du fonctionnement par le champ magnétique (15) et agissant sur l'organe d'actionnement (1).

3. Actionneur linéaire selon la revendication 1 ou 2, cependant que l'armature d'aimant (3) est réalisée sous forme annulaire et entoure l'élément support (4).

4. Actionneur linéaire selon la revendication 3, **caractérisé en ce que** le rapport entre le diamètre extérieur de l'armature d'aimant (3) et le diamètre intérieur de l'armature d'aimant (3) est au maximum de 2:1, de préférence au maximum de 1,5:1, en outre de préférence au maximum de 1,25:1.

5. Actionneur linéaire selon une des revendications de 1 à 4, cependant que la section transversale de l'armature d'aimant (3) s'effile vers l'intérieur en direction radiale.

6. Actionneur linéaire selon une des revendications de 1 à 5, cependant que l'élément support (4) comprend de l'aluminium, du magnésium, de la matière plastique et/ou un matériau composite de fibres, ou en est essentiellement composé entièrement.

7. Actionneur linéaire selon une des revendications de 1 à 6, cependant que le au moins un aimant permanent (7) est agencé sur la circonférence extérieure de l'armature d'aimant, cependant que, de préférence, deux aimants permanents (7) espacés en direction axiale sont prévus.

8. Actionneur linéaire selon une des revendications de 1 à 7, cependant que l'élément support (4) comporte des transpercements (12) et présente, de préférence en direction axiale, au moins en certaines zones (17), une dimension inférieure à celle de l'armature d'aimant (3).

9. Actionneur linéaire selon une des revendications de 1 à 8, cependant que l'élément support (4) comprend au moins une partie emboutie.

10. Actionneur linéaire selon une des revendications de 1 à 9, cependant que l'organe d'actionnement (1) est, à des côtés axiaux opposés de l'armature d'aimant, respectivement couplé de telle façon avec le stator (2) par l'intermédiaire d'au moins un élément ressort (6) que l'organe d'actionnement (1) est, au moyen des éléments ressort (6), orienté radialement par rapport au stator (2).

11. Actionneur linéaire selon la revendications 10, cependant que, à l'état détendu, les éléments ressort (6) sont plans et s'étendent dans un plan perpendiculairement à la direction du mouvement de l'organe d'actionnement (4).

12. Actionneur linéaire selon la revendication 10 ou 11, cependant que les éléments ressort (6) sont découpés, de préférence estampés, à partir d'un matériau en forme de tôle.

13. Palier de moteur destiné à un moteur d'un véhicule, comprenant au moins un actionneur linéaire selon une des revendications de 1 à 12 et une commande pour l'actionneur linéaire, la commande étant conçue pour contrecarrer des vibrations du palier de moteur par une commande appropriée de l'actionneur linéaire.

14. Utilisation de l'actionneur linéaire selon une des revendications de 1 à 12 dans un palier de moteur pour un moteur d'un véhicule.
